# EUROPEAN PATENT SPECIFICATION

(11) **EP 4 151 320 B1**
(45) Date of publication and mention of the grant of the patent: **07.10.2026**
(21) Application number: 21889450.9
(22) Date of filing: 26.10.2021
(51) Int. Cl.: B05C 5/02, B05C 11/10, H01M 4/04

(54) **SLOT DIE COATER**
SCHLITZDÜSENBESCHICHTER
DISPOSITIF D'ENDUCTION À FILIÈRE À FENTE

(30) Priority: 05.11.2020 KR 20200147035
(43) Date of publication of application: 22.03.2023
(73) Proprietor: LG Energy Solution, Ltd., Seoul 07335 (KR)
(72) Inventor: LEE, Taek-Soo, Daejeon 34122 (KR); JEON, Shin-Wook, Daejeon 34122 (KR); CHOY, Sang-Hoon, Daejeon 34122 (KR)
(74) Representative: Plasseraud IP
(86) International application number: PCT/KR2021/015135
(87) International publication number: WO 2022/097985

(56) References cited:
- WO-A1-00/50215
- CN-A- 109 718 999
- JP-A- 2010 051 953
- JP-A- 2018 089 599
- JP-A- 2018 089 599
- KR-A- 20190 019 827
- US-A1- 2007 125 877
- US-A1- 2013 236 651
- US-A1- 2015 165 470
- US-B2- 9 687 872

## Description

### TECHNICAL FIELD

The present disclosure relates to a slot die coater, and more particularly to a slot die coater capable of uniformly forming a coating boundary formed in a machine direction (MD). The present application claims priority to Korean Patent Application No. 10-2020-0147035 filed on November 5, 2020 in the Republic of Korea.

### BACKGROUND ART

As technology development and demand for mobile devices increase, the demand for secondary batteries as an energy source is rapidly increasing, and such secondary batteries essentially include an electrode assembly which is a power generation element. The electrode assembly has a form in which a positive electrode, a separator, and a negative electrode are stacked at least once, and the positive electrode and the negative electrode are prepared by applying and drying a positive electrode active material slurry and a negative electrode active material slurry on a current collector made of aluminum foil and copper foil, respectively. In order to equalize charging/discharging features of secondary batteries, the positive electrode active material slurry and the negative electrode active material slurry should be uniformly coated on the current collector, and a slot die coater is conventionally used.

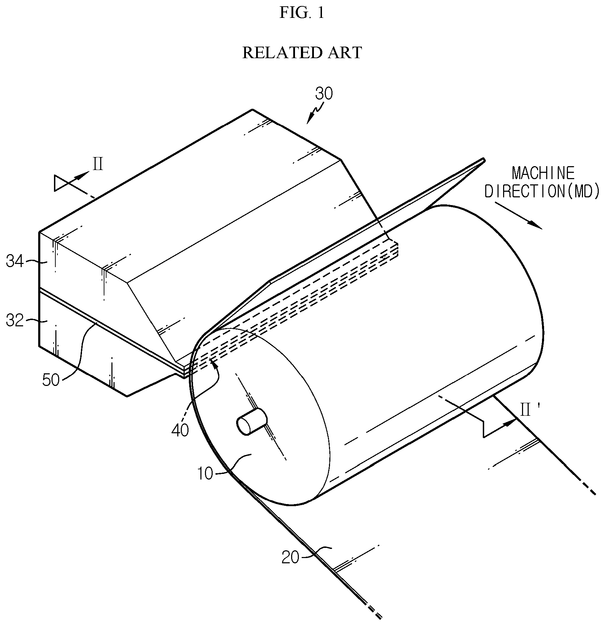

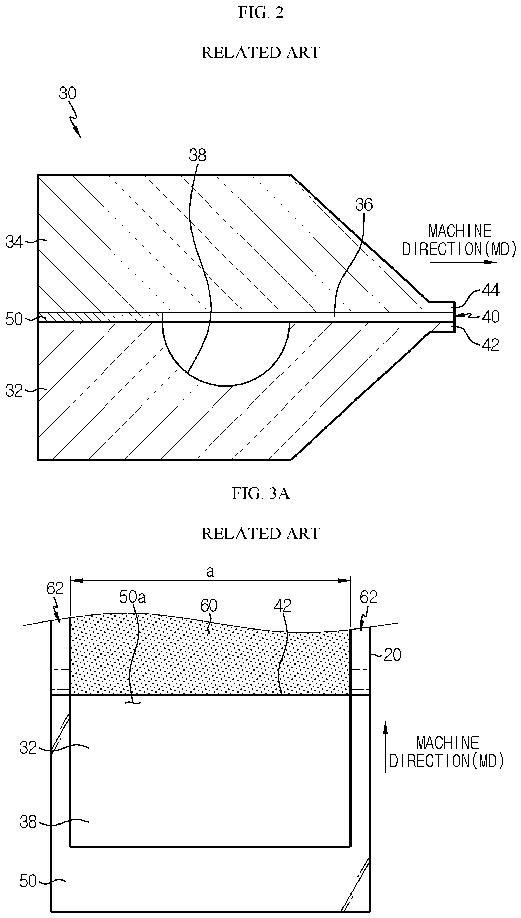

FIG. 1 shows an example of a coating method using a conventional slot die coater. FIG. 2 is a cross-sectional view of the slot die coater taken along II-II' of FIG. 1 along a machine direction (MD) (a traveling direction of a current collector).

Referring to FIGS. 1 and 2, in an electrode manufacturing method using a slot die coater 30, an electrode active material slurry discharged from the slot die coater 30 is applied on an current collector 20 transferred by a coating roll 10. The electrode active material slurry discharged from the slot die coater 30 is widely applied on one surface of the current collector 20 to form an electrode active material layer. The slot die coater 30 includes two die blocks 32 and 34 and forms a slot 36 between the two die blocks 32 and 34. The electrode active material slurry supplied from a feed portion (not shown) is accommodated in a manifold 38 and discharged through a discharge port 40 communicatively connected to the slot 36, thereby forming the electrode active material layer. Reference numerals 42 and 44 denote die lips which are front ends of the die blocks 32 and 34, respectively.

A coating width of the electrode active material layer coated on the current collector 20 is determined according to a width of the slot 36. When it is necessary to change the coating width, various coating widths may be implemented by changing a shim plate 50 that determines an inner space of the manifold 38 and the width of the slot 36. In this regard, FIGS. 3A to 3C schematically show examples of adjusting the coating width by varying the size and shape of the shim plate 50 inserted between the die blocks 32 and 34.

Referring to FIG. 3A, the shim plate 50 includes an open portion 50a by cutting one region thereof and is interposed in the remaining parts except for one side of an edge region of an opposite surface of each of the die blocks 32 and 34. A width of the open portion 50a of the shim plate 50 is designed such that an electrode active material layer 60 having a coating width a is formed on the current collector 20, and uncoated portions 62 are formed on both sides of the electrode active material layer 60.

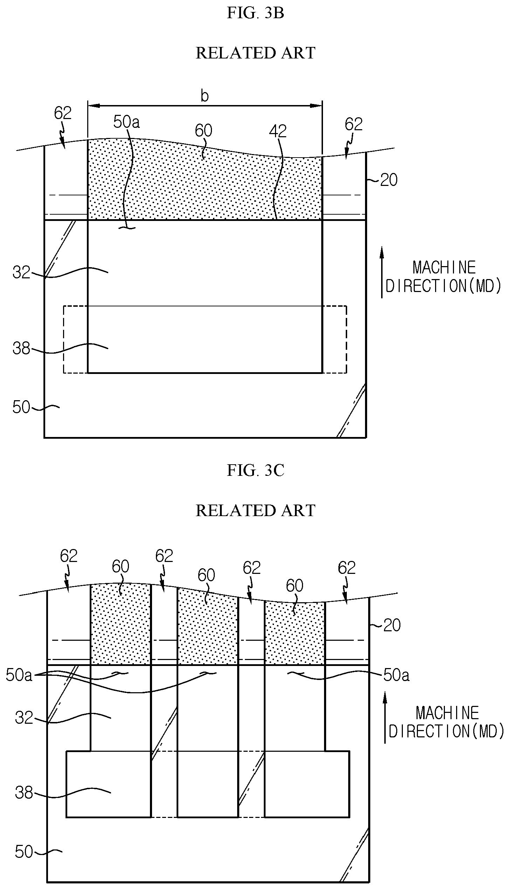

Referring to FIG. 3B, in order to form the electrode active material layer 60 having a coating width b smaller than a on the current collector 20, the width of the open portion 50a of the shim plate 50 is designed as b.

If necessary, the electrode active material layer 60 having a stripe pattern shape may be formed on the current collector 20. In such a case, the shim plate 50 as shown in FIG. 3C is used. Referring to FIG. 3C, a region of the shim plate 50 is intermittently cut so that the shim plate 50 includes a plurality of open portions 50a, and the width of the open portion 50a is c smaller than a or b. When such a shim plate 50 is used, the electrode active material layer 60 having the coating width c is formed on the current collector 20 in a plurality of stripe pattern shapes as many as the number of the open portions 50a, and the uncoated portions 62 are formed on both sides of the electrode active material layer 60.

For various reasons, when a coating gap, that is, a distance between the discharge port 40 of the slot die coater 30 and the current collector 20 (or a distance between the die lips 42 and 44 and the current collector 20) is small, in particular, when the coating gap is smaller than a coating thickness (before drying), a large pressure is applied to the discharged electrode active material slurry due to the small coating gap. For this reason, the following problems frequently occur when the electrode active material layer 60 having the stripe pattern shape as shown in FIG. 3C is formed.

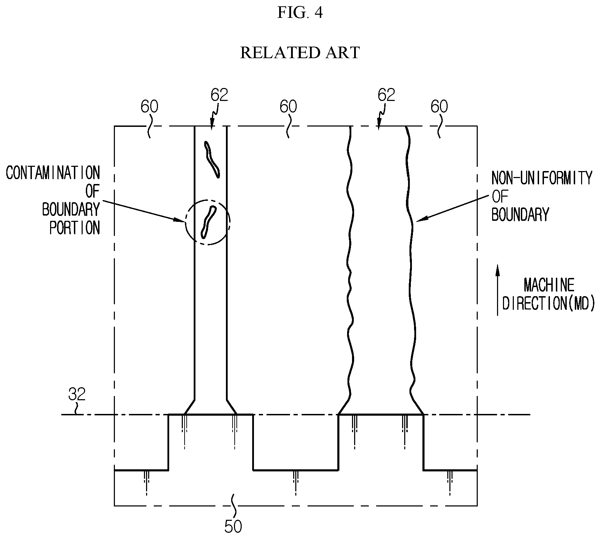

FIG. 4 is a diagram showing a problem when a conventional shim plate is used. Referring to FIG. 4, as a result of applying a large pressure to a discharged electrode active material slurry, a defect caused by intermittently scattering the electrode active material slurry to a region outside a boundary, rather than stably forming the boundary between the electrode active material layer 60 and the uncoated portion 62 is illustrated. As the electrode active material slurry scatters and is coated on the uncoated portion 62, contamination of a boundary portion occurs, or non-uniformity of a boundary such as a wave pattern occurs on the boundary. A coating boundary formed in an MD needs to be uniformly formed in order to avoid a slitting defect when slitting along the uncoated portion 62 later to form an electrode with each electrode active material layer 60, and to prevent possible occurrence of an electrode short circuit after a secondary battery is manufactured due to the contamination remaining in the uncoated portion 62.

US2013/236651 relates to a shim member which is sandwiched between two die blocks provided in a the coater, and has the U shape formed by a base end portion which is arranged so as to extend in a longitudinal direction of the slot, and a pair of extending portions which extend toward a nose portion of the die from both ends in a longitudinal direction of the base end portion, wherein a first portion which is a nose portion of at least one extending portion or the whole of at least the one extending portion, out of the pair of the extending portions, and a second portion which is the remaining portion including at least the base end portion, are structured so as to be separable from each other.

US2015/165470 relates to a die coater which can improve a distribution of film thickness in the width direction of a coating, and can reduce the length of an end part of the coating, and a method for producing a coated film. The die coater includes: a main body of a die block, which has a manifold and a slit that communicates with the manifold and discharges a coating liquid therefrom; and spacers that are arranged on each of both end parts in a width direction of the slit and define a width of a flow channel of the coating liquid, wherein an area of a notch region in each spacer is larger than an area of a virtual triangle.

Document CN109718999A also discloses a coating method for electrode manufacturing.

### DISCLOSURE

### Technical Problem

The present disclosure is designed to solve the problems of the related art, and therefore the present disclosure is directed to providing a slot die coater capable of uniformly forming a coating boundary formed in a machine direction (MD).

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The invention is defined by the independent method claims. Further embodiments of the invention are defined by the dependent claims.

In one aspect of the present disclosure, there is provided a slot die coater.

The chamfered part may be any one of a stepped surface having a constant cutting depth, or an inclined surface, a convex curved surface, or a concave curved surface having a cutting depth gradually increasing toward the end of the shim plate.

The inclined surface may be formed at an angle of 10 degrees to 80 degrees with respect to a direction in which the coating solution is discharged.

In the chamfered part, a cutting depth in a direction in which the coating solution is discharged and a cutting width in a width direction of the slot die coater may be equal to or greater than A.

The chamfered part may be formed symmetrically with respect to the discharged coating solution.

The shim plate includes a plurality of open portions by intermittently cutting the one region, and a coating layer of a stripe pattern shape is formed on the substrate.

In another aspect of the present disclosure, there is provided a dual slot die coater .

The lower shim plate and the upper shim plate include a plurality of open portions by intermittently cutting the at least one region, and a coating layer of a stripe pattern shape is formed on the substrate.

Each of the lower shim plate and the upper shim plate include a plurality of open portions by intermittently cutting the at least one region, and a coating layer of a stripe pattern shape is formed on the substrate.

The lower shim plate and the upper shim plate may be aligned with each other in up and down direction.

The lower die block may include a first manifold accommodating a first electrode active material slurry and communicatively connected with the lower slot and the intermediate die block includes a second manifold accommodating a second electrode active material slurry and communicatively connected with the upper slot.

The lower shim plate is provided between the lower die block and the intermediate die block to determine a vertical width of the lower slot. The upper shim plate is provided between the intermediate die block and the upper die block to determine a vertical width of the upper slot.

### Advantageous Effects

According to an aspect of the present disclosure, while the end of the shim plate is aligned with the die lip, a part of a corner among corners of the shim plate from which the coating solution is discharged is chamfered. According to this configuration, even if a large pressure is applied to the coating solution discharged from the discharge port when the coating gap is small, after the coating solution is sufficiently expanded from the end of the shim plate through the chamfered part, that is, after a certain part of the discharge pressure is relieved, the coating solution leaves the die lip and reachs the substrate so that the coating solution does not scatter. Accordingly, the boundary is stably formed between the coating portion and the uncoated portion.

According to another aspect of the present disclosure, the dual slot die coater optimized for application of the electrode active material slurry is provided. While aligning the end of the upper shim plate or the lower shim plate with the die lip, a corner among corners of the upper shim plate or the lower shim plate from which the coating solution is discharged is chamfered. According to this configuration, even if a large pressure is applied to the electrode active material slurry when the coating gap is small, the coating solution does not scatter. Accordingly, the boundary is stably formed between the coating portion and the uncoated portion. **In** particular, when the electrode active material layer having a stripe pattern shape is formed, it is possible to stably form the electrode active material layer without contamination of the boundary portion or non-uniformity of the boundary such as a wave pattern on the boundary.

According to another aspect of the present disclosure, the dual slot die coater capable of simultaneously discharging two types of electrode active material slurries through the upper slot and the lower slot and forming the electrode active material layer of a double layer on the substrate is provided. It is possible to stably form a boundary between the electrode active material layer of a double layer and the uncoated portion. Accordingly, it is possible to obtain a coating product of uniform quality, particularly an electrode for a secondary battery.

When the slot die coater of the present disclosure is used, it is possible to uniformly form the coating layer, particularly the electrode active material layer, with a desired thickness and shape, and preferably, it is possible to simultaneously coat two types of electrode active material slurries, and thus both performance and productivity are excellent.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic diagram showing an example of using a slot die coater according to the conventional art.
FIG. 2 is a cross-sectional view taken along II-II' of FIG. 1.
FIGS. 3A to 3C show various examples of using a conventional slot die coater.
FIG. 4 is a diagram showing a problem when a conventional shim plate is used.
FIG. 5 is a cross-sectional view of a slot die coater according to an embodiment of the present disclosure.
FIG. 6 is a schematic exploded perspective view of a slot die coater according to an embodiment of the present disclosure.
FIG. 7A shows an example of use of a shim plate in a slot die coater according to an embodiment of the present disclosure.
FIGS. 7B and 7C show modification examples of FIG. 7A.
FIG. 8 is a cross-sectional view taken along VIII-VIII' of FIG. 7A.
FIG. 9 shows examples of various shapes of chamfered part in a shim plate.
FIG. 10 is a schematic cross-sectional view of a dual slot die coater according to another embodiment of the present disclosure.
FIG. 11 is a schematic exploded perspective view of a dual slot die coater according to another embodiment of the present disclosure.
FIG. 12 shows an example of use of a lower shim plate in a dual slot die coater according to another embodiment of the present disclosure.
FIG. 13 is a side view of the dual slot die coater shown in FIG. 10.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

The slot die coater or the dual slot die coater of the present disclosure is an apparatus including a slot and coating a coating solution on a substrate through the slot. Since the dual slot die coater includes a lower slot and an upper slot, the dual slot die coater is an apparatus capable of coating a coating solution in a double layer. The 'substrate' described below is a current collector and the coating solution is an 'electrode active material slurry'. Both a first coating solution and a second coating solution are electrode active material slurries, and may mean electrode active material slurries that have the same or different composition (types of an active material, a conductive material, and a binder), content (an amount of each of the active material, the conductive material, and the binder), or physical properties. In particular, the dual slot die coater of the present disclosure is optimized for electrodes manufactured by applying at least two types of electrode active material slurries at the same time or by pattern coating of applying at least two types of electrode active material slurries in an alternating manner. However, the scope of the present disclosure is not necessarily limited thereto. For example, the substrate may be a porous scaffold constituting a separation membrane, and the first coating solution and the second coating solution may be organic matters having different compositions or physical properties. That is, when thin film coating is required, any substrate and any coating solution or any first coating solution and any second coating solution may be good.

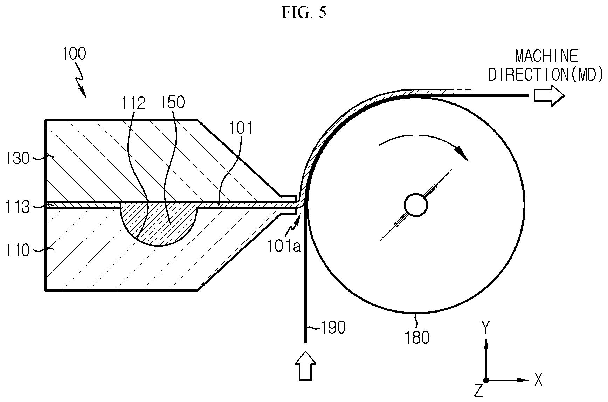

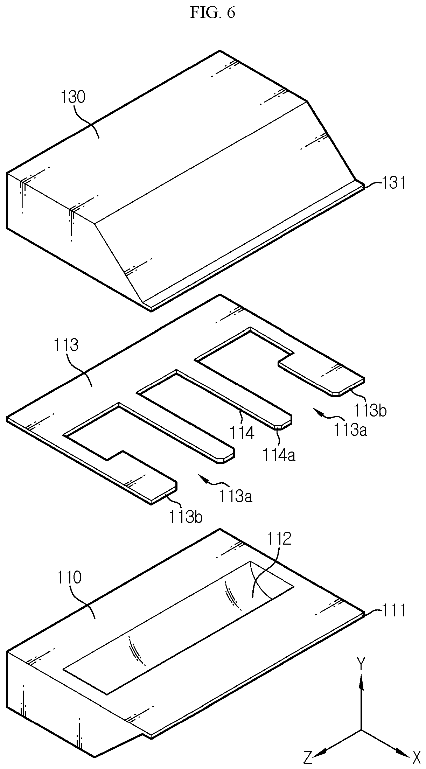

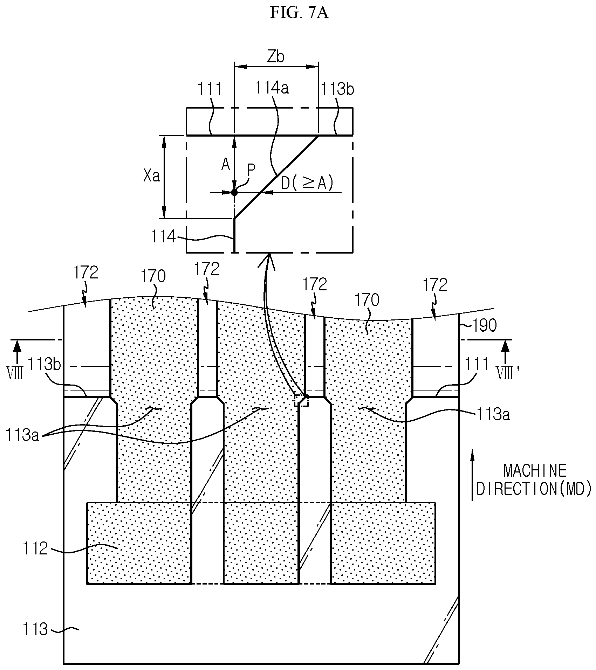

FIG. 5 is a cross-sectional view of a slot die coater according to an embodiment of the present disclosure. FIG. 6 is a schematic exploded perspective view of the slot die coater according to an embodiment of the present disclosure. FIG. 7A shows an example of use of a shim plate in the slot die coater according to an embodiment of the present disclosure.

Referring to FIGS. 5 to 7A, the slot die coater 100 includes two die blocks 110 and 130. A shim plate 113 for forming a slot 101 is provided between the die blocks 110 and 130. The die blocks may be two or more.

In FIG. 5, the slot die coater 100 is installed in a substantially horizontal direction (X direction) in which an electrode active material slurry which is a coating solution is discharged (approximately: ±5 degrees). However, the slot die coater 100 is not limited to the example form here. For example, the slot die coater 100 may be configured as a vertical die in which a direction in which the electrode active material coating solution is discharged upward (Y direction). The Z direction is a width direction of the slot die coater 100.

The slot 101 is formed between where the die blocks 110 and 130 face each other. The shim plate 113 is provided between the die blocks 110 and 130 to provide a gap between the die blocks 110 and 130 so that the slot 101 corresponding to a passage through which the coating solution 150 flows is formed. A thickness of the shim plate 113 determines a vertical width (Y direction and a slot gap) of the slot 10.

As shown in FIG. 6, the shim plate 113 includes a plurality of open portions 113a by intermittently cutting one region thereof. The shim plate 113 may be interposed in the remaining parts except for one side of an edge region of an opposite surface of each of the die blocks 110 and 130. Accordingly, a discharge port 101a through which the coating solution150 is discharged to the outside is formed between die lips 111 and 131, which are fore ends of the die blocks 110 and 130, respectively. The discharge port 101a is formed when the die lips 111 and 131 are spaced apart from each other.

For reference, the shim plate 113 functions as a gasket to prevent the coating solution 150 from leaking into the gap between the die blocks 110 and 130, except for a region where the discharge port 101a is formed, and thus the shim plate 113 is preferably made of a material having a sealing property.

Any one of the die blocks 110 and 130 includes a manifold 112 having a predetermined depth and communicatively connected with the slot 101. Although not shown, the manifold 112 is connected to a coating solution supply chamber (not shown) installed outside through a supply pipe to receive the coating solution 150. When the coating solution 150 is fully filled in the manifold 112, the flow of the coating solution 150 is induced along the slot 101 and discharged to the outside through the discharge port 101a.

According to the slot die coater 100 having such a configuration, a rotatably provided coating roll 180 is disposed in front of the slot die coater 100, the substrate 190 to be coated by rotating a coating roll 180 is driven, the coating solution 150 is applied on the substrate 190 by discharging and contacting the coating solution 150 with the surface of the substrate 190. The coating solution 150 may continuously discharged and contacted with the surface of the substrate 190. Alternatively, supply and interruption of the coating solution 150 may be alternately performed so that pattern-coating may be intermittently performed on the substrate 190.

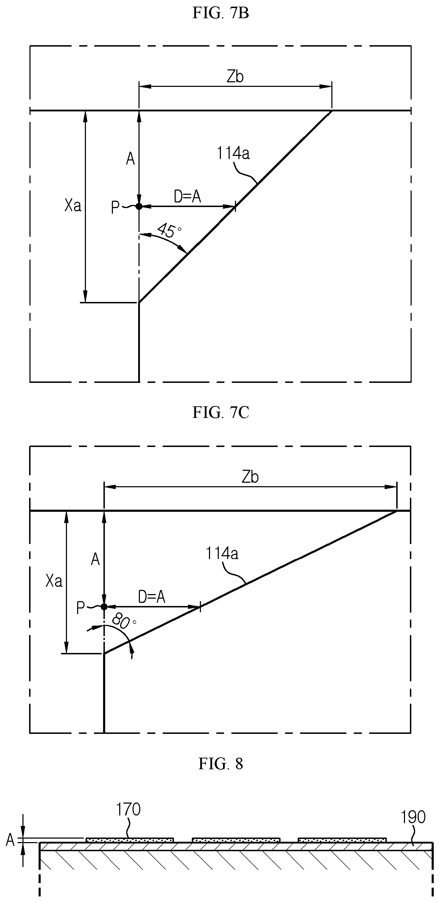

Here, the shim plate 113 determines a coating width of a coating layer applied on the substrate 190, and has a state of use as in FIG. 7A. FIG. 8 is a cross-sectional view taken along VIII-VIII' of FIG. 7A.

Referring to FIG. 7A, the slot die coater 100 of FIG. 5 viewed in a down direction after the die block 130 thereon is removed is illustrated. The die lip 111 and an end 113b of the shim plate 113 are aligned. Since the die lips 111 and 131 are usually aligned in a straight line, the end 113b of the shim plate 113 is also aligned with the die lip 131 which is not shown here.

In particular, the shim plate 113 shown in FIGS. 6 and 7A includes a plurality of open portions 113a by intermittently cutting one region thereof and forms a coating layer 170 of a stripe pattern shape on the substrate 190. Reference numeral 172 denotes an uncoated portion on which a coating layer is not formed. If there is one open portion 113a, one coating layer 170 may be formed on the substrate 190.

A part of a corner 114 among corners of the shim plate 113 defining the open portion 113a from which the coating solution 150 is discharged is chamfered. That is, a chamfer structure is applied. And, when a thickness of the coating solution applied on the substrate 190, that is, the coating layer 170 immediately after application, is A as shown in FIG. 8, the chamfered part has a shape cut by a depth D equal to or greater than A to the inside of the corner 114 in a region P away inward by A from the end 113b of the shim plate 113. A is an average thickness of the coating layer 170 immediately after application and before drying. If the chamfered part is cut smaller than A to the inside of the corner 114, a chamfering effect is insignificant. The present disclosure has difficulty in considering the thickness of the coating layer to be formed (immediately after coating and before drying) in determining the size of the chamfered part while applying the chamfer structure to the shim plate 113 as described above.

In order for the chamfered part to have the shape cut by the depth D equal to or greater than A to the inside of the corner 114 in the region P away inward by A from the end 113b of the shim plate 113, a cutting depth Xa in the MD, that is, a direction (X direction) in which the coating solution is discharged, needs to be greater than or equal to A. That is, in the present disclosure, the cutting depth Xa is greater than or equal to the thickness of the coating layer. In addition, a cutting width Zb in a width direction (Z direction) of the slot die coater also needs to be greater than or equal to A.

In the present embodiment, the corner 114 includes an inclined surface 114a having a cutting depth gradually increasing toward the end 113b. For example, the corner 114 is provided in a shape cut obliquely at an angle of 10 degrees to 80 degrees with respect to the direction (X direction) in which the coating solution is discharged so that the inclined surface 114a may be formed. The chamfered part, that is, the inclined surface 114a in the present embodiment, is symmetrically formed with respect to the coating solution 150 that is discharged. The inclined surface 114a may be formed on only one side with respect to the coating solution 150 that is discharged.

FIG. 7B shows the case where, for example, when the thickness of the coating solution applied on the substrate 190, that is, the coating layer 170 immediately after application is A, the chamfered part has the shape in which the depth D to the inside of the corner 114 in the region P away inward by A from the end 113b of the shim plate 113 is A and the corner 114 is provided in a shape cut obliquely at an angle of 45 degrees with respect to the direction (X direction) in which the coating solution is discharged, as the inclined surface 114a having a cutting depth gradually increasing toward the end 113b. In this case, the cutting depth Xa is 2A, and the cutting width Zb in the width direction (Z direction) of the slot die coater is also 2A. In this case, a cutting ratio Xa/Zb is 1.

FIG. 7C shows the case where, for example, when the thickness of the coating solution applied on the substrate 190, that is, the coating layer 170 immediately after application is A, the chamfered part has the shape in which the depth D to the inside of the corner 114 in the region P away inward by A from the end 113b of the shim plate 113 is A, which is the same as shown in FIG. 7B and the corner 114 is provided in a shape cut obliquely at an angle of 80 degrees with respect to the direction (X direction) in which the coating solution is discharged, as the inclined surface 114a having a cutting depth gradually increasing toward the end 113b. In this case, since the cutting depth Xa is smaller than that of FIG. 7B and the cutting width Zb is larger than that of FIG. 7B, the cutting ratio Xa/Zb is smaller than that of FIG. 7B.

As an modification of FIG. 7C, when the inclined surface 114a is provided in a shape cut obliquely at an angle of 10 degrees with respect to the direction (X direction) in which the coating solution is discharged, since the cutting depth Xa is larger than that of FIG. 7B and the cutting width Zb is smaller than that of FIG. 7B, it may be seen that Xa/Zb is larger than that of FIG. 7B.

As such, although FIGS. 7B and 7C are the same in that the chamfered part has the shape in which the depth D to the inside of the corner 114 in the region P away inward by A from the end 113b of the shim plate 113 is A, it should be noted that the cutting depth Xa, the cutting width Zb, and the cutting ratio Xa/Zb may be different in each case.

In other words, the present disclosure does not define the range of only the cutting depth Xa, only the range of the cutting width Zb, or the range of only the cutting ratio Xa/Zb, but is characterized in making the chamfered part having the size in which the depth D to the inside of the corner 114 in the region P away inward by A from the end 113b of the shim plate 113 is A with respect to the thickness A of the coating layer 170 immediately after application, that is, considering the thickness of the coating layer.

As such, the part of the corner 114 of the shim plate 113 of the slot die coater 100 according to the present embodiment from which the coating solution 150 is discharges is chamfered. For this reason, the width of the discharge port 101a is gradually expanded from one point as the discharge port 101a is closer to the outside. In other words, the discharge port 101a of the present embodiment may be provided to gradually expand in a rotational direction (or MD) of the coating roll 180. Accordingly, the pressure of the coating solution 150 that is discharged is dispersed, and thus the coating solution 150 does not scatter to other parts. Therefore, it is possible to stably form a boundary between the coating portion and the uncoated portion, and to improve the coating quality of the product.

As described above, in the slot die coater 100 of the present disclosure, while the end 113b of the shim plate 113 is aligned with the die lips 111 and 131, the part of the corner 114 among the corners of the shim plate 113 from which the coating solution 150 is discharges is chamfered. According to this configuration, even if a large pressure is applied to the coating solution 150 discharged from the discharge port when a coating gap is small, after the coating solution is sufficiently expanded from the shim plate end 113b through the chamfered part, that is, after a certain part of the discharge pressure is relieved, the coating solution leaves the die lips 111 and 131 and reach the substrate 190, so that the coating solution 150 does not scatter to other parts. Accordingly, a boundary is stably formed between the coating portion and the uncoated portion.

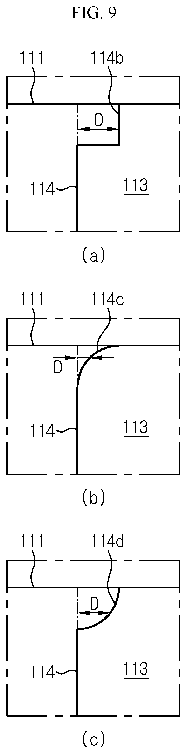

FIG. 9 shows examples of various shapes of chamfered part in the shim plate.

The shape of the chamfered part is a stepped surface 114b having the constant cutting depth D as shown in FIG. 9(a), a convex curved surface 114c having the cutting depth D gradually increasing toward the shim plate end 113b as shown in FIG. 9(b), or a concave curved surface 114d having the cutting depth D gradually increasing toward the shim plate end 113b as shown in FIG. 9(c). As such, the shim plate 113 is provided in a shape in which the corner 114 is cut in a straight line to include the flat surface as shown in FIG. 9(a) or is provided in a shape in which the corner 114 is cut somewhat round to include the curved surface as shown in FIG. 9(b) or 9(c). As such, the present disclosure does not limit the shape of the chamfered part.

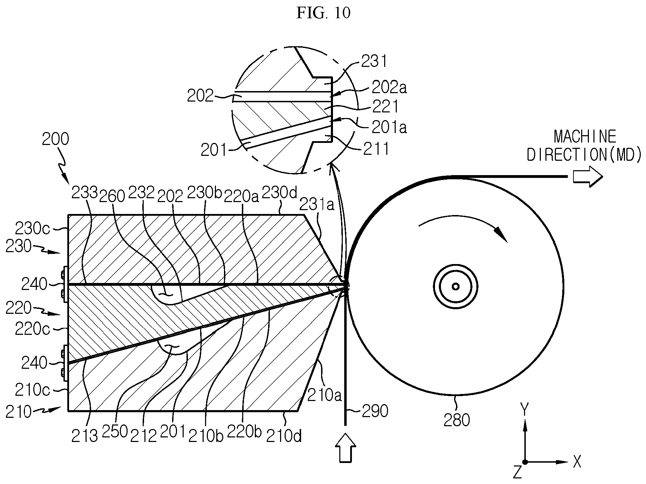

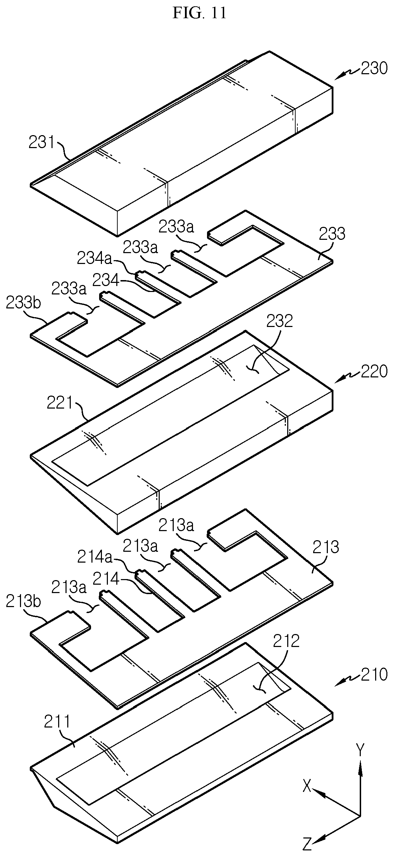

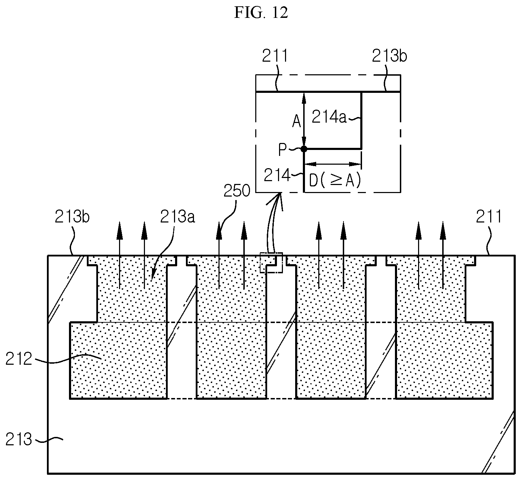

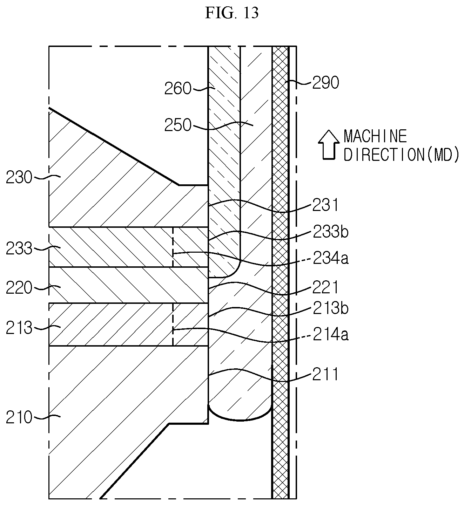

FIG. 10 is a schematic cross-sectional view of a dual slot die coater according to another embodiment of the present disclosure. FIG. 11 is a schematic exploded perspective view of a dual slot die coater according to another embodiment of the present disclosure. FIG. 12 shows an example of use of a lower shim plate in a dual slot die coater according to another embodiment of the present disclosure. FIG. 13 is a side view of the dual slot die coater shown in FIG. 10.

A dual slot die coater 200 according to the present disclosure is an apparatus including a lower slot 201 and an upper slot 202, and capable of simultaneously or alternately applying the same or different two kinds of coating solutions on a substrate 290 through the lower slot 201 and the upper slot 202.

Referring to FIGS. 10 and 11, the dual slot die coater 200 includes a lower die block 210, an intermediate die block 220 disposed on an upper portion of the lower die block 210, and an upper die block 230 disposed on an upper portion of the intermediate die block 220.

In FIG. 10, the dual slot die coater 200 is installed in a substantially horizontal direction (X direction) in which an electrode active material slurry which is a coating solution is discharged (approximately: ±5 degrees).

The intermediate die block 220 is a block located in the middle of blocks constituting the dual slot die coater 200, and is a block disposed between the lower die block 210 and the upper die block 230 to form a dual slot. A cross section of the intermediate die block 220 of the present embodiment is a right triangle, but is not necessarily limited to such as shape. For example, the cross section may be provided as an isosceles triangle.

A first surface 220a of the intermediate die block 220 facing the upper die block 230 lies almost horizontally, and a surface 230d (that is, a surface forming an upper surface of an outer circumferential surface of the dual slot die coater 200) opposite to a surface 230b of the upper die block 230 facing the first surface 220a also lies almost horizontally. In this way, the first surface 220a and the opposite surface 230d are almost parallel to each other. And a surface 210d (that is, a surface forming a lower surface of the outer circumferential surface of the dual slot die coater 200) opposite to a surface 210b of the lower die block 210 facing the intermediate die block 220 also lies almost horizontally, and this surface is a bottom surface 210d (X-Z plane).

Surfaces of the lower die block 210, the intermediate die block 220, and the upper die block 230 which are opposite to a direction in which the electrode active material slurry is discharged, that is, rear surfaces 210c, 220c, and 230c, lie almost vertically (Y direction).

In a surface forming the outer circumferential surface of the dual slot die coater 200 in the lower die block 210 and the upper die block 230 which are the outermost die blocks, the bottom surface 210d of the lower die block 210 and the upper surface 230d of the upper die block 230 manufactured to be almost vertical to the rear surfaces 210c and 230c may be used. And, the first surface 220a of the intermediate die block 220 manufactured to be almost vertical to the rear surface 220c may be used. In such die blocks 210, 220, and 230, since edges formed by surfaces are formed at right angles, there is a right angle portion in the cross section, and since a vertical or horizontal surface may be used as a reference surface, manufacturing or handling of the die blocks 210, 220, and 230 are easy and the precision thereof is guaranteed. In addition, a state in which the lower die block 210, the intermediate die block 220, and the upper die block 230 are combined has an approximately rectangular parallelepiped shape as a whole, and only a front portion from which the coating solution is discharged is inclined toward the substrate 290. This is advantageous in that a shape after assembly is approximately similar to that of a slot die coater including a single slot (e.g., 100 in FIG. 5) so that a slot die coater stand, etc. may be shared.

The dual slot die coater 200 may further include two or more fixing units 240 provided on the rear surfaces 210c, 220c, and 230c thereof. The fixing units 240 are provided for fastening between the lower die block 210 and the intermediate die block 220 and for fastening between the intermediate die block 220 and the upper die block 230. A plurality of fixing units 240 may be provided in the width direction of the dual slot die coater 200. Bolts are fastened to the fixing units 240, through which the lower die block 210, the intermediate die block 220, and the upper die block 230 are assembled with each other.

The lower die block 210, the intermediate die block 220, and the upper die block 230 are not necessarily limited to shapes of the above examples, and may be configured, for example, as vertical dies with the direction in which the electrode active material slurry is discharged as an upper direction and the rear surfaces 210c, 220c, and 230c as bottom surfaces.

The lower die block 210 is a lowermost block among the blocks constituting the dual slot die coater 200, and the surface 210b facing the intermediate die block 220 has an inclined shape to form an angle of approximately 20 degrees to 60 degrees with respect to the bottom surface 210d.

The lower slot 201 is formed where the lower die block 210 and the intermediate die block 220 face each other. A lower shim plate 213 is interposed between the lower die block 210 and the intermediate die block 220 to provide a gap therebetween, so that the lower slot 201 corresponding to a passage through which the first coating solution 250 flows is formed. That is, the lower shim plate 213 defines the lower slot 201, and in this case, the thickness of the lower shim plate 213 determines the vertical width (Y-axis direction and a slot gap) of the lower slot 201.

The lower shim plate 213 includes a plurality of open portions 213a by intermittently cutting one region thereof so that a coating width of the electrode active material layer formed on the substrate 290 is determined. The lower shim plate 213 may be interposed in the remaining portion except for one side in an edge region of an opposite surface of each of the lower die block 210 and the intermediate die block 220 as shown in FIGS. 11 and 12. Accordingly, a lower discharge port 201a through which the first coating solution 250 is discharged to the outside is formed only between a lower die lip 211, which is a front end portion of the lower die block 210, and the intermediate die lip 221, which is a front end portion of the intermediate die block 220. The lower discharge port 201a is formed by making the lower die lip 211 and the intermediate die lip 221 spaced apart from each other.

For reference, the lower shim plate 213 functions as a gasket to prevent the first coating solution 250 from leaking into a gap between the lower die block 210 and the intermediate die block 220 except for the region where the lower discharge port 201a is formed, and thus the lower shim plate 213 is preferably made of a material having sealing property.

The lower die block 210 includes a first manifold 212 having a predetermined depth on the surface 210b facing the intermediate die block 220 and communicatively connected to the lower slot 201. Although not shown in the drawings, the first manifold 212 is connected to a supply chamber (not shown) of the first coating solution 250 installed outside through a supply pipe to receive the first coating solution 250. When the first coating solution 250 is fully filled in the first manifold 212, the flow of the first coating solution 250 is induced along the lower slot 201 and discharged to the outside through the lower discharge port 201a.

As another example, the first manifold 212 may be provided on a surface 220b of the intermediate die block 220 facing the lower die block 210.

The upper die block 230 is disposed to face the first surface 220a which is an upper surface of the intermediate die block 220 that is horizontal with respect to a bottom surface. The upper slot 202 is thus formed where the intermediate die block 220 and the upper die block 230 face to each other.

Like the lower slot 201 described above, a second shim plate 233 is interposed between the intermediate die block 220 and the upper die block 230 to provide a gap therebetween. Accordingly, the upper slot 202 corresponding to a passage through which a second coating solution 260 flows is formed. In this case, a vertical width (Y-axis direction and a slot gap) of the upper slot 202 is determined by the second shim plate 233.

In addition, the second shim plate 233, which also has a structure similar to that of the above-described first shim plate 213, includes a plurality of open portions 233a by intermittently cutting one region thereof. The second shim plate 233 may be interposed in the remaining portion except for one side in an edge region of an opposite surface of each of the intermediate die block 220 and the upper die block 230. Similarly, a circumferential direction of the second shim plate 233 except for the front of the upper slot 202 is blocked, and the upper discharge port 202a is formed only between the front end portion of the intermediate die block 220 and a front end portion of the upper die block 230. The front end portion of the upper die block 230 is defined as the upper die lip 231. **In** other words, the upper discharge port 202a is formed by making the intermediate die lip 221 and the upper die lip 231 spaced apart from each other. As such, the upper shim plate 233 defines the upper slot 202.

**In** addition, the intermediate die block 220 includes a second manifold 232 having a predetermined depth on the surface 220a facing the upper die block 230 and communicatively connected to the upper slot 202. Although not shown in the drawings, the second manifold 232 is connected to a supply chamber of the second coating solution 260 installed outside through a supply pipe to receive the second coating solution 260. When the second coating solution 260 is supplied from the outside along the supply pipe in the shape of a pipe and fully filled in the second manifold 232, the flow of the second coating solution 260 is induced along the upper slot 202 communicatively connected to the second manifold 232 and discharged to the outside through the upper discharge port 202a.

As another example, the second manifold 232 may be provided on the surface 230b of the upper die block 230 facing the middle die block 220.

The upper slot 202 and the lower slot 201 form a certain angle, and the angle may be approximately 20 degrees to 70 degrees. The upper slot 202 and the lower slot 201 may intersect each other at one point, and the upper discharge port 202a and the lower discharge port 201a may be provided near the intersection point. Accordingly, discharge points of the first coating solution 250 and the second coating solution 260 may be concentrated approximately at one point.

In the dual slot die coater 200, a rotatably provided coating roll 280 is disposed in front of the dual slot die coater 200, the substrate 290 to be coated by rotating the coating roll 280 is driven, a coating solution such as the electrode active material slurry is extruded through at least one of the upper slot 202 and the lower slot 201 to form the electrode active material layer on the substrate 290.

Here, the lower shim plate 213 and the upper shim plate 233 determine the coating width of the electrode active material layer applied on the substrate 290, and have the same state of use as in FIG. 12.

Referring to FIG. 12, the slot die coater 200 of FIG. 10 viewed in a down direction after the upper die block 230 and the intermediate die block 220 thereon are removed is illustrated. The lower die lip 211 and an end 213b of the lower shim plate 213 are aligned. The first coating solution 250 is discharged from the first manifold 212 toward the substrate 290 through the open portion 213a of the lower shim plate 213. Since the lower die lip 211 and the intermediate die lip 221 are usually aligned in a straight line, the end 213b of the lower shim plate 213 is also aligned with the intermediate die lip 221 which is not shown here.

A part of a corner 214 among corners of the lower shim plate 113 defining the open portion 213a from which the first coating solution 250 is discharged is chamfered. When a thickness of the coating solution applied on the substrate 290 is A, the chamfered part has a shape cut by the depth D equal to or greater than A to the inside of the corner 214 in the region P away inward by A from the end 213b of the lower shim plate 213. If the chamfered part is cut smaller than A to the inside of the corner 214, a chamfering effect is insignificant.

In the present embodiment, the part of the corner 214 is a stepped surface 214a having the constant cutting depth D. The chamfered part, that is, the stepped surface 214a in the present embodiment, is formed symmetrically with respect to the first coating solution 250 that is discharged. The stepped surface 214a may be formed on only one side with respect to the first coating solution 250.

The example of use of the upper shim plate 233 is the same as that of the lower shim plate 213, and an end 233b of the lower shim plate 213 is also aligned with the upper die lip 221 and the intermediate die lip 221. As shown in FIG. 11, a part of a corner 234 among corners defining the open portion 233a in the upper shim plate 233 from which the second coating solution 260 is discharged is also chamfered, and the chamfered part is a stepped surface 234a having a constant cutting depth.

Meanwhile, in the present embodiment, the example in which the chamfer structure is applied to both the upper shim plate 233 and the lower shim plate 213 is illustrated and described, but the chamfer structure may be applied to only the upper shim plate 233 or only the lower shim plate 21.

The lower shim plate 213 and the upper shim plate 233 are aligned with each other in the up and down direction (X direction), and thus may be used as shown in FIG. 13. According to the dual slot die coater 200 having the configuration described above with further reference to FIG. 13, the rotatably provided coating roll 280 is disposed in front of the dual slot die coater 200, the substrate 290 to be coated by rotating the coating roll 280 is driven, and the first coating solution 250 and the second coating solution 260 are contacted with the surface of the substrate 290 so that the substrate 290 may be coated in a double layer. The first coating solution 250 and the second coating solution may be continuously coated with the surface of the substrate 290. Alternatively, supply and interruption of the first coating solution 250 and supply and interruption of the second coating solution 260 are alternately performed so that pattern-coating may be intermittently performed on the substrate 290.

The dual slot die coater 200 is optimized for application of the electrode active material slurry for manufacturing a secondary battery. **In** order to manufacture a secondary battery of high energy density, the thickness of the electrode active material layer which was about 130 µm gradually increased to reach 300 µm. When the thick electrode active material layer is formed with the conventional slot die coater, since migration of a binder and a conductive material in the active material slurry deepens during drying, a final electrode is manufactured non-uniformly. **In** order to solve this problem, when coating is performed two times such as applying thinly and drying the electrode active material layer and then applying and drying the electrode active material layer, a disadvantage is that it takes a long time. **In** order to simultaneously improve electrode performance and productivity, when the dual slot die coater 200 is used, two types of electrode active material slurries may be simultaneously applied.

According to a chamfer configuration of the lower shim plate 213 and/or the upper shim plate 233, even if a large pressure is applied to the electrode active material slurry when the coating gap is small, the coating solution does not scatter. Accordingly, the boundary is stably formed between the coating portion and the uncoated portion. **In** particular, when the electrode active material layer having a stripe pattern shape is formed, it is possible to stably form the electrode active material layer without contamination of the boundary or non-uniformity of the boundary such as a wave pattern on the boundary. This leads to no defect in the slitting along the uncoated portion. It is possible to reduce a discarded electrode plate, and thus the cost reduction effect is excellent.

Also, when the electrode active material layer of a double layer is formed on the substrate 290 by simultaneously discharging two types of electrode active material slurries through the upper slot 202 and the lower slot 201, it is possible to stably form a boundary between the electrode active material layer of a double layer and the uncoated portion in both cases where different types of electrode active material slurries are used or the electrode active material layer is thickly coated by using the same electrode active material slurry. Accordingly, it is possible to obtain a coating product of uniform quality, particularly an electrode for a secondary battery.

In addition, when two types of electrode active material slurries are simultaneously applied, since the second coating solution 260 discharged from the upper discharge port 202a contacts the first coating solution 250 in a state where the first coating solution 250 discharged from the lower discharge port 201a first contacts the surface of the substrate 290, at this time, there is a concern that the flow in an upstream direction is strong due to the discharge pressure of the second coating solution 260 applied to the first coating solution 250, but the discharge pressure is relieved by using the lower shim plate 213 and/or the upper shim plate 233 having the chamfer structure as proposed in the present disclosure, and thus it is possible to solve various problems in a coating process caused by the excessive discharge pressure.

When the dual slot die coater 200 of the present disclosure is used, it is possible to uniformly form the coating layer, particularly the electrode active material layer, with a desired thickness and shape, and preferably, it is possible to simultaneously coat two types of electrode active material slurries, and thus both performance and productivity are excellent.

Meanwhile, in the present embodiment, the case of applying the coating solution in two layers or the case of performing pattern-coating by alternately supplying the coating solution has been described as an example, but it will be understood without separate explanation that it is also applied to the case where three or more layers are simultaneously applied by providing three or more slots.

As described above, according to the present disclosure, even if the discharge pressure of the electrode active material slurry increases, the effect of preventing the electrode active material slurry from scattering by relieving the pressure of the electrode active material slurry by the shim plate chamfer structure is excellent. This has the effect of forming a stable boundary, securing coating processability, and securing reproducibility.

Hereinafter, comparative examples and embodiments will be described in order to explain the effect of the shim plate as proposed in the present disclosure.

The experimental conditions and results are summarized in Table 1.

**[Table 1]**

| | Coating speed (m/min) | Viscosity (cps) | Coating solution thickness (µm) | Cutting depth (µm) | Shim plate offset (µm) | Contamination of boundary portion | Non-uniformity of boundary |
|---|---|---|---|---|---|---|---|
| Comparative example 1 | 50 | 4000 | 100 | 90 | 0 | O | X |
| Embodiment 1 | 50 | 4000 | 100 | 120 | 0 | X | X |
| Embodiment 2 | 50 | 4000 | 100 | 500 | 0 | X | X |
| Embodiment 3 | 50 | 4000 | 100 | 1000 | 0 | X | X |
| Embodiment 4 | 50 | 4000 | 100 | 2500 | 0 | X | X |
| Comparative example 2 | 50 | 4000 | 100 | 120 | 150 | X | O |
| Comparative example 3 | 50 | 4000 | 100 | 500 | 300 | X | O |

The coating speed was all set to 50 m/min. The viscosity of the electrode active material slurry which is the coating solution was all 4000 cps. The thickness of the coating solution was 100 µm as a target. In Table 1, the cutting depth is the cutting depth D at a position inward by the film thickness (100 µm) inward from the end of the shim plate.

Comparative Examples 1 and Embodiments 1 to 4 are cases where the die lip and the end of the shim plate are aligned, and the shim plate offset is 0.

Comparative Example 1 is a case where the shim plate has a chamfered part, but the cutting depth inward the corner is 90 µm, which is smaller than the thickness of the coating solution of 100 µm. Here, contamination of the boundary portion has occurred.

As in Embodiments 1 to 4, when the cutting depth inward the corner of the shim plate is greater than the thickness of the coating solution, contamination of the boundary portion has not occurred, and non-uniformity of the boundary has not also occurred.

Comparative Examples 2 and 3 are cases where the cutting depth inward the corner of the shim plate is greater than the thickness of the coating solution, but the end of the shim plate is moved backward compared to the die lip so that the shim plate offsets are 150 µm and 300 µm, respectively. Contamination of the boundary portion has not occurred, but non-uniformity of the boundary has occurred.

As described above, even if the shim plate has the chamfered part, when the cutting depth does not satisfy the conditions as proposed in the present disclosure, the pressure applied to the electrode active material slurry is not sufficiently relieved, and contamination of the boundary portion occurs (Comparative Example 1). Even if the shim plate has the chamfered part as proposed in the present disclosure, when an offset exists at the die lip and the end of the shim plate, non-uniformity of the boundary occurs (Comparative Examples 2 and 3).

As described above, according to the embodiment of the present disclosure, the size of the chamfered part of the corner of the shim plate is determined in consideration of the thickness of the coating solution applied on the substrate, and the die lip and the end of the shim plate are aligned and used, thereby forming the electrode active material layer having no contamination of the boundary portion, a uniform boundary and no other defects.

FIG. 7B shows the case where when the thickness of the coating solution applied on the substrate 190, that is, the coating layer 170 immediately after application is A, the chamfered part has the shape in which the depth D to the inside of the corner 114 in the region P away inward by A from the end 113b of the shim plate 113 is A, and the cutting ratio Xa/Zb is 1. Additional comparative examples including a comparative example which is the same as FIG. 7B in that the cutting ratio Xa/Zb is 1 but does not consider the thickness A of the coating layer are shown in Table 2.

**[Table 2]**

| | Coating solution thickness (µm) | Cutting depth Xa (µm) | Cutting width Zb (µm) | Cutting ratio Xa/Zb (µm) | Shim plate offset (µm) | Contamination of boundary portion | Non-uniformity of boundary |
|---|---|---|---|---|---|---|---|
| Comparative example 4 | 200 | 180 | 180 | 1 | 0 | O | X |
| Comparative example 5 | 200 | 180 | 170 | 1.059 | 0 | O | X |
| Comparative example 6 | 200 | 180 | 160 | 1.125 | 0 | O | X |

Comparative Example 4 is the same as FIG. 7B in that the cutting ratio Xa/Zb is 1 but is a case where the shim plate is cut at a position inward less than 200 µm which is the thickness of the coating layer and the cutting depth Xa is 180 µm. Although the die lip and the end of the shim plate were aligned and used (offset 0), contamination of the boundary portion has occurred.

Comparative Examples 5 and 6 are cases in which the cutting depth Xa is the same as that of Comparative Example 4, but the cutting width Zb is smaller than that of Comparative Example 4, and the cutting ratio Xa/Zb is greater than that of Comparative Example 4. Even at this time, although the die lip and the end of the shim plate were aligned and used, contamination of the boundary portion has occurred.

As such, unlike the present disclosure, when the thickness of the coating layer is not considered, poor quality is exhibited.

The present disclosure has been described in detail. However, it should be understood that the detailed description and specific examples, while indicating preferred embodiments of the disclosure, are given by way of illustration only.

Meanwhile, although terms indicating directions such as up, down, left, and right are used in the present specification, these terms are only for convenience of description, and it is apparent to those skilled in the art that these terms may vary depending on a position of a target object or a position of an observer.

### [Explanation of Reference Numerals]

| | | | |
|---|---|---|---|
| 100: | slot die coater | 101: | slot |
| 101a: | discharge port | 110, 130: | die block |
| 111, 131: | die lip | 112: | manifold |
| 113: | shim plate | 113a: | open portion |
| 113b: | end | 114, 214, 234: | corner |
| 114a: | inclined surface | 114b, 214a, 234a: | stepped surface |
| 114c: | convex surface | 114d: | concave surface |
| 150: | coating solution | 170: | coating layer |
| 172: | uncoated portion | 180, 280: | coating roll |
| 190, 290: | substrate | 200: | dual slot die coater |
| 201: | lower slot | 201a: | lower discharge port |
| 202: | upper slot | 202a: | upper discharge port |
| 210: | lower die block | 211: | lower die lip |
| 212: | first manifold | 213: | lower shim plate |
| 220: | intermediate die block | 221: | intermediate die lip |
| 230: | upper die block | 231: | upper die lip |
| 232: | second manifold | 233: | upper shim plate |
| 240: | fixing unit | 250: | first coating solution |
| 260: | second coating solution | | |

## Claims

1. A coating method for electrode manufacturing, the coating method using a slot die coater (100) and a rotatably provided coating roll (180) disposed in front of the slot die coater (100) to coat a coating solution (150) on a surface of a substrate (190) to be coated that is driven by the coating roll (180),
the slot die coater (100) comprising:
at least two die blocks (110, 130) each comprising die lips (111, 131) as their front ends, wherein a manifold (112) is provided in one of the die blocks (110, 130) accommodating the coating solution (150); and
a shim plate (113) provided between the two die blocks (110, 130) to form a slot (101), the shim plate (113) comprising:
an end (113b) of the shim plate (113) aligned with the die lips (111, 131) of the die blocks (110, 130),
a plurality of open portions (113a) by intermittently cutting at least one region P thereof from the end (113b) of the shim plate (113) such that a coating width of a coating layer applied on the substrate (190) is determined, wherein a part of a corner (114) among corners of the shim plate (113) defining the open portion (113a) from which the coating solution (150) is discharged is chamfered, wherein the chamfered part has a cutting depth Xa in a direction in which the coating solution (150) is discharged and a cutting width Zb in a width direction of the slot die coater (100), and
a discharge port (101a) formed between the die lips (111, 131) of the die blocks (110, 130) through which the coating solution (150) is discharged to the outside, wherein the discharge port (101a) is communicatively connected with the slot (101),
wherein the coating method comprises the steps of:
driving the substrate (190) by rotating the coating roll (180),
discharging and contacting the coating solution (150) from the slot die coater (100) with the surface of the substrate (190) such that a thickness of the coating solution (150) immediately after application on the substrate (190) is the thickness A, wherein the thickness A is equal to or smaller than the cutting depth Xa and the cutting width Zb, and
forming the coating layer of a stripe pattern shape on the substrate (190) without contamination or non-uniformity of boundary portion formed between the coating portion and the uncoated portion.

2. The coating method of claim 1, wherein the chamfered part is an inclined surface (114a) that is formed at an angle of 10 degrees to 80 degrees with respect to a direction in which the coating solution (150) is discharged.

3. The coating method of claim 1, wherein the chamfered part of the slot die coater (100) is formed symmetrically with respect to the discharged coating solution (150).

4. A coating method for electrode manufacturing, the coating method using a dual slot die coater (200) and a rotatably provided coating roll (280) disposed in front of the dual slot die coater (200) to simultaneously or alternately coat a first coating solution (250) and a second coating solution (260) on a surface of a substrate (290) to be coated that is driven by the coating roll (280),
the dual slot die coater (200) comprising:
a lower die block (210), an intermediate die block (220) disposed on an upper portion of the lower die block (210), and an upper die block (230) disposed on an upper portion of the intermediate die block (220), respectively comprising a lower die lip (211), an intermediate die lip (221), and an upper die lip (231) forming front ends thereof, wherein a first manifold (212) is provided in the lower die block (210) accommodating the first coating solution (250) and a second manifold (232) is provided in the intermediate die block (220) accommodating the second coating solution (260);
a lower shim plate (213) interposed between the lower die block (210) and the intermediate die block (220) to form a lower slot (201), wherein the lower shim plate (213) comprises an end (213b) aligned with the lower die lip (211) and the intermediate die lip (221), a lower discharge port (201a) formed between the lower die lip (211) and the intermediate die lip (221) through which the first coating solution (250) is discharged to the outside, wherein the lower discharge port (201a) is communicatively connected with the lower slot (201); and
an upper shim plate (233) interposed between the intermediate block (220) to form an upper slot (202), wherein the upper shim plate (233) comprises an end (233b) aligned with the intermediate die lip (221) and the upper die lip (231), an upper discharge port (202a) formed between the intermediate die lip (221) and the upper die lip (231) through which the second coating solution (260) is discharged to the outside, wherein the upper discharge port (202a) is communicatively connected with the upper slot (202),
wherein the lower shim plate (213) and/or the upper shim plate (233) further comprises:
a plurality of open portions (213a, 233a) by intermittently cutting at least one region P thereof from the end of the shim plate such that a coating width of a coating layer applied on the substrate (290) is determined, wherein a part of a corner (214, 234) among corners of the shim plate (213, 233) defining the open portion (213a, 233a) from which the coating solution (250, 260) is discharged is chamfered, wherein the chamfered part is a stepped surface (214a, 234a) having a shape cut by a constant cutting depth D to the inside of the corner (214, 234), wherein the coating method comprises the steps of:
driving the substrate (290) by rotating the coating roll (280),
discharging and contacting the coating solution (250, 260) from at least one of the lower slot (201) or the upper slot (202) of the dual slot die coater (200) with the surface of the substrate (290) such that a thickness of the coating solution (250, 260) immediately after application on the substrate (290) is thickness A, wherein the thickness A is equal to or smaller than the cutting depth D, and
forming the coating layer of a stripe pattern shape on the substrate (290) without contamination or non-uniformity of boundary portion formed between the coating portion and the uncoated portion.

5. The coating method of claim 4, wherein the chamfered part of the dual slot die coater (200) is formed symmetrically with respect to the discharged coating solution (250; 260).

6. The coating method of claim 4 or 5, wherein the lower shim plate (213) and the upper shim plate (233) of the dual slot coater (200) are aligned with each other in up and down direction.

## Patentansprüche

1. Beschichtungsverfahren zur Elektrodenherstellung, wobei das Beschichtungsverfahren einen Schlitzdüsenbeschichter (100) und eine drehbar vorgesehene Beschichtungswalze (180) verwendet, die vor dem Schlitzdüsenbeschichter (100) angeordnet ist, um eine Beschichtungslösung (150) auf eine Oberfläche eines zu beschichtenden Substrats (190) aufzutragen, das von der Beschichtungswalze (180) angetrieben wird,
wobei der Schlitzdüsenbeschichter (100) umfasst:
mindestens zwei Düsenblöcke (110, 130), die jeweils Düsenlippen (111, 131) als ihre vorderen Enden umfassen, wobei ein Verteiler (112) in einem der Düsenblöcke (110, 130) vorgesehen ist, der die Beschichtungslösung (150) aufnimmt; und
eine Zwischenplatte (113), die zwischen den beiden Düsenblöcken (110, 130) vorgesehen ist, um einen Schlitz (101) zu bilden,
wobei die Zwischenplatte (113) umfasst:
ein Ende (113b) der Zwischenplatte (113), das mit den Düsenlippen (111, 131) der Düsenblöcke (110, 130) ausgerichtet ist,
eine Vielzahl von offenen Abschnitten (113a) durch intermittierendes Schneiden mindestens eines Bereichs P davon vom Ende (113b) der Zwischenplatte (113), so dass eine Beschichtungsbreite einer auf das Substrat (190) aufgebrachten Beschichtungsschicht bestimmt wird, wobei ein Teil einer Ecke (114) unter den Ecken der Zwischenplatte (113), die den offenen Abschnitt (113a) definieren, aus dem die Beschichtungslösung (150) ausgegeben wird, abgeschrägt ist, wobei der abgeschrägte Teil eine Schnitttiefe Xa in einer Richtung, in der die Beschichtungslösung (150) ausgegeben wird, und eine Schnittbreite Zb in einer Breitenrichtung des Schlitzdüsenbeschichters (100) aufweist, und
eine Auslassöffnung (101a), die zwischen den Düsenlippen (111, 131) der Düsenblöcke (110, 130) ausgebildet ist und durch die die Beschichtungslösung (150) nach außen ausgegeben wird, wobei die Auslassöffnung (101a) kommunikativ mit dem Schlitz (101) verbunden ist,
wobei das Beschichtungsverfahren die folgenden Schritte umfasst:
Antreiben des Substrats (190) durch Drehen der Beschichtungswalze (180),
Ausgeben und Inkontaktbringen der Beschichtungslösung (150) aus dem Schlitzdüsenbeschichter (100) mit der Oberfläche des Substrats (190), so dass eine Dicke der Beschichtungslösung (150) unmittelbar nach dem Auftragen auf das Substrat (190) die Dicke A ist, wobei die Dicke A gleich oder kleiner als die Schnitttiefe Xa und die Schnittbreite Zb ist, und
Bilden der Beschichtungsschicht in einer Streifenmusterform auf dem Substrat (190) ohne Verunreinigung oder Ungleichmäßigkeit des Grenzabschnitts, der zwischen dem beschichteten Abschnitt und dem unbeschichteten Abschnitt ausgebildet ist.

2. Beschichtungsverfahren nach Anspruch 1, wobei der abgeschrägte Teil eine geneigte Fläche (114a) ist, die in einem Winkel von 10 Grad bis 80 Grad in Bezug auf eine Richtung ausgebildet ist, in der die Beschichtungslösung (150) ausgegeben wird.

3. Beschichtungsverfahren nach Anspruch 1, wobei der abgeschrägte Teil des Schlitzdüsenbeschichters (100) symmetrisch in Bezug auf die ausgegebene Beschichtungslösung (150) ausgebildet ist.

4. Beschichtungsverfahren zur Elektrodenherstellung, wobei das Beschichtungsverfahren einen Doppelschlitzdüsenbeschichter (200) und eine drehbar vorgesehene Beschichtungswalze (280) verwendet, die vor dem Doppelschlitzdüsenbeschichter (200) angeordnet ist, um gleichzeitig oder abwechselnd eine erste Beschichtungslösung (250) und eine zweite Beschichtungslösung (260) auf eine Oberfläche eines zu beschichtenden Substrats (290) aufzutragen, das von der Beschichtungswalze (280) angetrieben wird,
wobei der Doppelschlitzdüsenbeschichter (200) umfasst:
einen unteren Düsenblock (210), einen mittleren Düsenblock (220), der auf einem oberen Abschnitt des unteren Düsenblocks (210) angeordnet ist, und einen oberen Düsenblock (230), der auf einem oberen Abschnitt des mittleren Düsenblocks (220) angeordnet ist, die jeweils eine untere Düsenlippe (211), eine mittlere Düsenlippe (221) und eine obere Düsenlippe (231) umfassen, die deren vordere Enden bilden, wobei ein erster Verteiler (212) im unteren Düsenblock (210) vorgesehen ist, der die erste Beschichtungslösung (250) aufnimmt, und ein zweiter Verteiler (232) im mittleren Düsenblock (220) vorgesehen ist, der die zweite Beschichtungslösung (260) aufnimmt;
eine untere Zwischenplatte (213), die zwischen dem unteren Düsenblock (210) und dem mittleren Düsenblock (220) eingefügt ist, um einen unteren Schlitz (201) zu bilden, wobei die untere Zwischenplatte (213) ein Ende (213b) umfasst, das mit der unteren Düsenlippe (211) und der mittleren Düsenlippe (221) ausgerichtet ist, eine untere Auslassöffnung (201a), die zwischen der unteren Düsenlippe (211) und der mittleren Düsenlippe (221) ausgebildet ist und durch die die erste Beschichtungslösung (250) nach außen ausgegeben wird, wobei die untere Auslassöffnung (201a) kommunikativ mit dem unteren Schlitz (201) verbunden ist; und
eine obere Zwischenplatte (233), die zwischen dem mittleren Block (220) eingefügt ist, um einen oberen Schlitz (202) zu bilden, wobei die obere Zwischenplatte (233) ein Ende (233b) umfasst, das mit der mittleren Düsenlippe (221) und der oberen Düsenlippe (231) ausgerichtet ist, eine obere Auslassöffnung (202a), die zwischen der mittleren Düsenlippe (221) und der oberen Düsenlippe (231) ausgebildet ist und durch die die zweite Beschichtungslösung (260) nach außen ausgegeben wird, wobei die obere Auslassöffnung (202a) kommunikativ mit dem oberen Schlitz (202) verbunden ist,
wobei die untere Zwischenplatte (213) und/oder die obere Zwischenplatte (233) ferner umfassen:
eine Vielzahl von offenen Abschnitten (213a, 233a) durch intermittierendes Schneiden mindestens eines Bereichs P davon vom Ende der Zwischenplatte, so dass eine Beschichtungsbreite einer auf das Substrat (290) aufgebrachten Beschichtungsschicht bestimmt wird, wobei ein Teil einer Ecke (214, 234) unter den Ecken der Zwischenplatte (213, 233), die den offenen Abschnitt (213a, 233a) definieren, aus dem die Beschichtungslösung (250, 260) ausgegeben wird, abgeschrägt ist, wobei der abgeschrägte Teil eine abgestufte Fläche (214a, 234a) ist, die eine Form aufweist, die durch eine konstante Schnitttiefe D zur Innenseite der Ecke (214, 234) geschnitten ist,
wobei das Beschichtungsverfahren die folgenden Schritte umfasst:
Antreiben des Substrats (290) durch Drehen der Beschichtungswalze (280),
Ausgeben und Inkontaktbringen der Beschichtungslösung (250, 260) aus mindestens einem von dem unteren Schlitz (201) oder dem oberen Schlitz (202) des Doppelschlitzdüsenbeschichters (200) mit der Oberfläche des Substrats (290), so dass eine Dicke der Beschichtungslösung (250, 260) unmittelbar nach dem Auftragen auf das Substrat (290) die Dicke A ist, wobei die Dicke A gleich oder kleiner als die Schnitttiefe D ist, und
Bilden der Beschichtungsschicht in einer Streifenmusterform auf dem Substrat (290) ohne Verunreinigung oder Ungleichmäßigkeit des Grenzabschnitts, der zwischen dem beschichteten Abschnitt und dem unbeschichteten Abschnitt ausgebildet ist.

5. Beschichtungsverfahren nach Anspruch 4, wobei der abgeschrägte Teil des Doppelschlitzdüsenbeschichters (200) symmetrisch in Bezug auf die ausgegebene Beschichtungslösung (250; 260) ausgebildet ist.

6. Beschichtungsverfahren nach Anspruch 4 oder 5, wobei die untere Zwischenplatte (213) und die obere Zwischenplatte (233) des Doppelschlitzdüsenbeschichters (200) in Auf- und Abwärtsrichtung miteinander ausgerichtet sind.

## Revendications

1. Procédé de revêtement pour la fabrication d'électrodes, le procédé de revêtement utilisant une machine d'enduction à filière à fente (100) et un rouleau de revêtement (180) disposé de manière rotative en face de la machine d'enduction à filière à fente (100) pour revêtir une solution de revêtement (150) sur une surface d'un substrat (190) à revêtir qui est entraîné par le rouleau de revêtement (180),
la machine d'enduction à filière à fente (100) comprenant :
au moins deux blocs de filière (110, 130) comprenant chacun des lèvres de filière (111, 131) en tant que leurs extrémités avant, dans lequel un collecteur (112) est prévu dans l'un des blocs de filière (110, 130) recevant la solution de revêtement (150) ; et
une plaque d'épaisseur (113) prévue entre les deux blocs de filière (110, 130) pour former une fente (101),
la plaque d'épaisseur (113) comprenant :
une extrémité (113b) de la plaque d'épaisseur (113) alignée avec les lèvres de filière (111, 131) des blocs de filière (110, 130),
une pluralité de parties ouvertes (113a) en découpant par intermittence au moins une région P de celle-ci à partir de l'extrémité (113b) de la plaque d'épaisseur (113) de telle sorte qu'une largeur de revêtement d'une couche de revêtement appliquée sur le substrat (190) est déterminée, dans lequel une partie d'un coin (114) parmi les coins de la plaque d'épaisseur (113) définissant la partie ouverte (113a) à partir de laquelle la solution de revêtement (150) est déchargée est chanfreinée, dans lequel la partie chanfreinée a une profondeur de coupe Xa dans une direction dans laquelle la solution de revêtement (150) est déchargée et une largeur de coupe Zb dans une direction de largeur de la machine d'enduction à filière à fente (100), et
un orifice de décharge (101a) formé entre les lèvres de filière (111, 131) des blocs de filière (110, 130) à travers lequel la solution de revêtement (150) est déchargée vers l'extérieur, dans lequel l'orifice de décharge (101a) est connecté en communication avec la fente (101),
dans lequel le procédé de revêtement comprend les étapes consistant à :
entraîner le substrat (190) en faisant tourner le rouleau de revêtement (180),
décharger et mettre en contact la solution de revêtement (150) de la machine d'enduction à filière à fente (100) avec la surface du substrat (190) de telle sorte qu'une épaisseur de la solution de revêtement (150) immédiatement après l'application sur le substrat (190) soit l'épaisseur A, dans lequel l'épaisseur A est égale ou inférieure à la profondeur de coupe Xa et à la largeur de coupe Zb, et
former la couche de revêtement d'une forme de motif en bandes sur le substrat (190) sans contamination ou non-uniformité de la partie de délimitation formée entre la partie de revêtement et la partie non revêtue.

2. Procédé de revêtement selon la revendication 1, dans lequel la partie chanfreinée est une surface inclinée (114a) qui est formée à un angle de 10 degrés à 80 degrés par rapport à une direction dans laquelle la solution de revêtement (150) est déchargée.

3. Procédé de revêtement selon la revendication 1, dans lequel la partie chanfreinée de la machine d'enduction à filière à fente (100) est formée symétriquement par rapport à la solution de revêtement déchargée (150).

4. Procédé de revêtement pour la fabrication d'électrodes, le procédé de revêtement utilisant une machine d'enduction à double filière à fente (200) et un rouleau de revêtement (280) disposé de manière rotative en face de la machine d'enduction à double filière à fente (200) pour revêtir simultanément ou alternativement une première solution de revêtement (250) et une seconde solution de revêtement (260) sur une surface d'un substrat (290) à revêtir qui est entraîné par le rouleau de revêtement (280),
la machine d'enduction à double filière à fente (200) comprenant :
un bloc de filière inférieur (210), un bloc de filière intermédiaire (220) disposé sur une partie supérieure du bloc de filière inférieur (210), et un bloc de filière supérieur (230) disposé sur une partie supérieure du bloc de filière intermédiaire (220), comprenant respectivement une lèvre de filière inférieure (211), une lèvre de filière intermédiaire (221) et une lèvre de filière supérieure (231) formant leurs extrémités avant, dans lequel un premier collecteur (212) est prévu dans le bloc de filière inférieur (210) recevant la première solution de revêtement (250) et un second collecteur (232) est prévu dans le bloc de filière intermédiaire (220) recevant la seconde solution de revêtement (260) ;
une plaque d'épaisseur inférieure (213) interposée entre le bloc de filière inférieur (210) et le bloc de filière intermédiaire (220) pour former une fente inférieure (201), dans lequel la plaque d'épaisseur inférieure (213) comprend une extrémité (213b) alignée avec la lèvre de filière inférieure (211) et la lèvre de filière intermédiaire (221), un orifice de décharge inférieur (201a) formé entre la lèvre de filière inférieure (211) et la lèvre de filière intermédiaire (221) à travers lequel la première solution de revêtement (250) est déchargée vers l'extérieur, dans lequel l'orifice de décharge inférieur (201a) est connecté en communication avec la fente inférieure (201) ; et
une plaque d'épaisseur supérieure (233) interposée entre le bloc intermédiaire (220) pour former une fente supérieure (202), dans lequel la plaque d'épaisseur supérieure (233) comprend une extrémité (233b) alignée avec la lèvre de filière intermédiaire (221) et la lèvre de filière supérieure (231), un orifice de décharge supérieur (202a) formé entre la lèvre de filière intermédiaire (221) et la lèvre de filière supérieure (231) à travers lequel la seconde solution de revêtement (260) est déchargée vers l'extérieur, dans lequel l'orifice de décharge supérieur (202a) est connecté en communication avec la fente supérieure (202),
dans lequel la plaque d'épaisseur inférieure (213) et/ou la plaque d'épaisseur supérieure (233) comprennent en outre :
une pluralité de parties ouvertes (213a, 233a) en découpant par intermittence au moins une région P de celles-ci à partir de l'extrémité de la plaque d'épaisseur de telle sorte qu'une largeur de revêtement d'une couche de revêtement appliquée sur le substrat (290) est déterminée, dans lequel une partie d'un coin (214, 234) parmi les coins de la plaque d'épaisseur (213, 233) définissant la partie ouverte (213a, 233a) à partir de laquelle la solution de revêtement (250, 260) est déchargée est chanfreinée, dans lequel la partie chanfreinée est une surface étagée (214a, 234a) ayant une forme découpée par une profondeur de coupe constante D à l'intérieur du coin (214, 234),
dans lequel le procédé de revêtement comprend les étapes consistant à :
entraîner le substrat (290) en faisant tourner le rouleau de revêtement (280),
décharger et mettre en contact la solution de revêtement (250, 260) à partir d'au moins l'une de la fente inférieure (201) ou de la fente supérieure (202) de la machine d'enduction à double filière à fente (200) avec la surface du substrat (290) de telle sorte qu'une épaisseur de la solution de revêtement (250, 260) immédiatement après l'application sur le substrat (290) soit l'épaisseur A, dans lequel l'épaisseur A est égale ou inférieure à la profondeur de coupe D, et
former la couche de revêtement d'une forme de motif en bandes sur le substrat (290) sans contamination ou non-uniformité de la partie de délimitation formée entre la partie de revêtement et la partie non revêtue.

5. Procédé de revêtement selon la revendication 4, dans lequel la partie chanfreinée de la machine d'enduction à double filière à fente (200) est formée symétriquement par rapport à la solution de revêtement déchargée (250 ; 260).

6. Procédé de revêtement selon la revendication 4 ou 5, dans lequel la plaque d'épaisseur inférieure (213) et la plaque d'épaisseur supérieure (233) de la machine d'enduction à double filière à fente (200) sont alignées l'une avec l'autre dans la direction verticale.
